**Europäisches Patentamt**

**European Patent Office**

**Office européen des brevets**

(19)

(11) Publication number: **0 066 430**
**B1**

## (12) EUROPEAN PATENT SPECIFICATION

(45) Date of publication of patent specification: **06.05.87**

(51) Int. Cl.⁴: **H 04 N 5/44**

(21) Application number: **82302614.1**

(22) Date of filing: **21.05.82**

(54) Television synchronous receiver.

(30) Priority: **22.05.81 JP 78215/81**
**26.06.81 JP 100270/81**

(43) Date of publication of application:
**08.12.82 Bulletin 82/49**

(45) Publication of the grant of the patent:
**06.05.87 Bulletin 87/19**

(84) Designated Contracting States:
**DE FR GB**

(56) References cited:
**FR-A-1 088 402**
**US-A-4 163 259**
**US-A-4 253 118**

(73) Proprietor: **Matsushita Electric Industrial Co.,**
**Ltd.**
**1006, Oaza Kadoma**
**Kadoma-shi Osaka-fu, 571 (JP)**

(72) Inventor: **Sakamoto, Yoichi**
**1-2-21, Daiwa Takatsuki-shi**
**Osaka-fu (JP)**

(74) Representative: **Crawford, Andrew Birkby**
**A.A. THORNTON & CO. Northumberland House**
**303-306 High Holborn**
**London WC1V 7LE (GB)**

Courier Press, Leamington Spa, England.

**0 066 430**

## Description

This invention relates to a television synchronous receiver.

FR—A—1088402 discloses a synchronous receiver having a synchronous receiving system comprising: a voltage controlled local oscillator; a means for shifting the phase of an output of said voltage controlled local oscillator by 90°; a first and a second synchronous detectors to detect an in-phase component and a quadrature component of a broadcast signal by the output of said voltage controlled local oscillator and an output of said means for shifting the phase of the output of said voltage controlled local oscillator by 90°, respectively; a phase comparator to detect the phase error between said broadcast signal and the output of said voltage controlled local oscillator; a low-pass filter for low-pass filtering an output of said phase comparator and applying said output to said voltage controlled local oscillator, said synchronous receiving system controlling said voltage controlled local oscillator so that the phase error between said broadcast signal and the output of said voltage controlled local oscillator becomes minimum and said first synchronous detector detects said broadcast signals.

It is an object of the present invention to incorporate such a synchronous receiver in a television system wherein circuit integration and automated manufacture is simplified.

A conventional television electronic tuner uses resonant circuits consisting of a diode and an inductor in each of a radio frequency input circuit, an interstage double tuning circuit and a local oscillating circuit. Since such a TV electronic tuner uses four varactor diodes whose voltage-capacitance characteristics slightly differ one another and since the tuner has the double tuning circuit, it is necessary to adjust inductance of the inductor and coupling coefficient of the double tuning circuit to obtain desired frequency tracking and selectivity. For this reason, circuits integration and manufacture automation of the TV electronic tuner become difficult.

Thus US—A—4163259 discloses an output signal of a UHF and VHF tuner supplied to an IF amplifier. A tuning system comprising a super heterodyne system is employed wherein a resonant circuit consisting of variable capacitance diodes and an inductor is used in each of the high-frequency input circuits, and a stagger double tuning circuit and a local oscillation circuit is used in the UHF and VHF tuner. Since the tuner uses plural variable capacitance diodes varying in voltage-capacitance characteristic and includes a double tuning circuit, the inductances of the inductors and the coupling factor between the inductors must be carefully adjusted so as to obtain desired tracking and selectivity characteristics. Again, circuit integration and automation of manufacture is difficult with such a circuit.

The present invention provides a television synchronous receiver of the type disclosed in FR—A—1088402 wherein a television channel selecting means is provided which establishes the output of voltage controlled local oscillator at a frequency very near to the video carrier frequency of a television broadcast signal to select a desired television signal, and that an output signal of a radio frequency input circuit is applied to said first and second synchronous detectors.

In accordance with the invention, no IF amplification is necessary since the demodulation process takes place with the voltage controlled local oscillator which is set up by the channel selecting means. In addition, no adjustments are necessary for obtaining the desired tracking and selectivity, so that circuit integration is simplified and the manufacturing process can easily be automated.

These and other objects, features and advantages will become fully apparent from the following description.

Details of this invention will be described hereinafter with reference to the accompanying drawings, in which:

Figure 1 is a block diagram of a first embodiment of the television synchronous receiver of the present invention;

Figure 2 is a diagram showing the characteristics of a low-pass filter which filters a synchronous detector output of the television synchronous receiver of the present invention;

Figure 3(a) is a diagram showing the detected output characteristics of a synchronous detector to which a television broadcast signal, which is not conveyed through intermediate frequency amplifier with Nyquist characteristics, is applied.

Figure 3(b) is a diagram showing the frequency characteristics of a video signal amplifier which has the characteristics to compensate the above mentioned detected output characteristics and whose characteristics has a trap for sound intermediate frequency carrier;

Figure 4 is a block diagram of a second embodiment of the television synchronous receiver of the present invention;

Figure 5 is a diagram showing 90° phase-shift PLL (phase locked loop) of the television synchronous receiver of the present invention; and

Figure 6 is a more concrete circuit diagram of the 90° phase shift PLL.

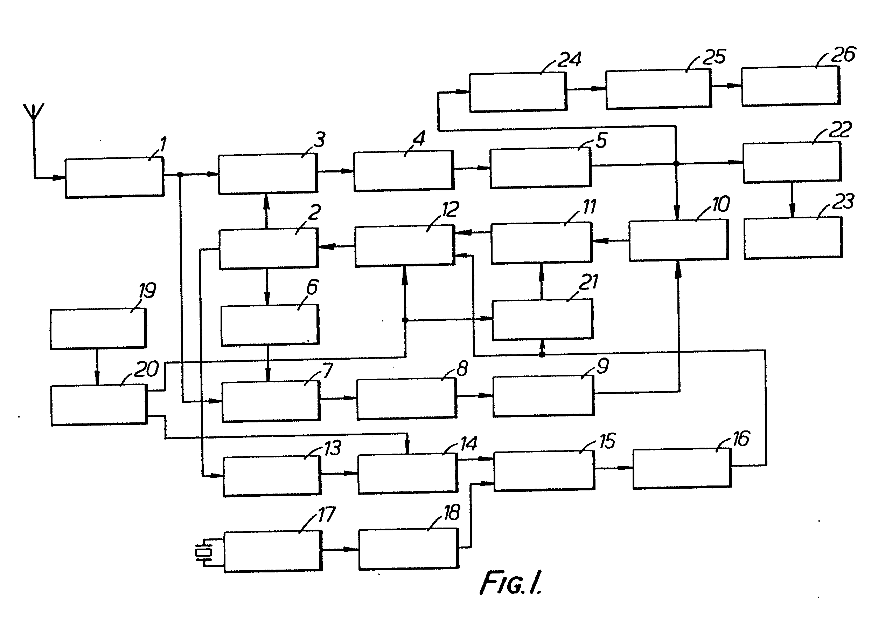

Figure 1 shows a block diagram of an embodiment of the present invention.

Referring to Figure 1, 1 is a radio frequency input circuit, 2 is a voltage controlled local oscillator, 3 is a synchronous detector, 4 is a low-pass filter, 5 is a signal amplifier, 6 is a 90° phase shifter, 7 is a synchronous detector, 8 is a low-pass filter, 9 is a signal amplifier, 10 is a phase comparator, 11 is a low-pass filter, 12 is an analog switch, and these construct a first PLL (phase locked loop) which is known as "Costas loop". 13 is a prescaler, 14 is a programmable divider, 15 is a phase comparator, 16 is a low-pass filter, 17 is a reference oscillator, 18 is a reference divider, and these construct a second PLL with said analog switch 12 and said voltage controlled local oscillator 2.

19 is a control entry apparatus, 20 is a channel selection control circuit, and 21 is an analog switch. According to a channel number entered into the control entry apparatus 19, one output of the channel selection circuit 20 gives the programmable divider 14 a divide ratio, and the other output of the channel selection circuit 20 switches the analog switch 12 and the analog switch 21 from the second PLL side to the first PLL side after the second PLL becomes in steady state. 22 is a video signal amplifier, 23 is a video output apparatus, 24 is a sound intermediate frequency amplifier, 25 is a frequency discriminator, and 26 is a sound output apparatus.

In the radio frequency input circuit 1, a plurality of television broadcast signals are entered. Let a video carrier signal of a channel of the television broadcast signals be $v_V(t)$ and a sound carrier signal of the same channel be $v_S(t)$.

Since $v_V(t)$ is vestigial sideband modulated, $v_V(t)$ is

$$v_V(t)=Re\{[I(t)+jQ(t)]\ exp\ j[\omega_v t+\phi_v]\}$$
$$=I(t)cos[\omega_v t+\phi_v]-Q(t)sin[\omega_v t+\phi_v] \tag{1}$$

where Re means the real part of the equation in { }, $I(t)$ is the amplitude of the in-phase component of the carrier, $Q(t)$ is the amplitude of the quadrature component of the carrier, $\omega_v$ is the angular frequency of the video carrier, and $\phi_v$ is the phase of the video carrier. $I(t)$ contains a video information signal and a synchronizing signal, but $I(t)$ will be simply called a video signal.

Let the output of the voltage controlled oscillator 2 be

$$v_o(t)=A_o cos(\omega_o t+\phi_o) \tag{2}$$

and if $v_o(t)$ is given to the synchronous detector 3 formed by a voltage multiplier together with the video carrier signal, the output of the synchronous detector 3 is

$$v_{PV}(t)=\{I(t)cos[\omega_v t+\phi_v]-Q(t)sin[\omega_v t+\phi_v]\}A_o cos(\omega_o t+\phi_o)$$

$$=\frac{A_o I(t)}{2}\{cos[(\omega_v+\omega_o)t+\phi_v+\phi_o]+cos[(\omega_v-\omega_o)t+\phi_v-\phi_o]$$

$$-\frac{A_o Q(t)}{2}\{sin[(\omega_v+\omega_o)t+\phi_v+\phi_o]+sin[(\omega_v-\omega_o)t+\phi_v-\phi_o]\} \tag{3}$$

When the output of the voltage controlled local oscillator 2 synchronizes the video carrier, then $\omega_o=\omega_v$, therefore

$$v_{PV}(t)=\frac{A_o I(t)}{2}\{cos[2\omega_v t+\phi_v+\phi_o]+cos[\phi_v-\phi_o]\}$$

$$-\frac{A_o Q(t)}{2}\{sin[2\omega_v t+\phi_v+\phi_o]+sin[\phi_v-\phi_o]\} \tag{4}$$

the filtered output through the low-pass filter 4 to remove the $2\omega_v$ terms is

$$v_{PV}(t)=\frac{A_o I(t)}{2}cos\phi-\frac{A_o Q(t)}{2}sin\phi \tag{5}$$

where $\phi=\phi_v-\phi_o$, or $\phi$ is the error of the phase of the video carrier and the phase of the voltage controlled local oscillator 2. When $\phi=0$,

$$v_{PV}(t)=\frac{A_o I(t)}{2} \tag{6}$$

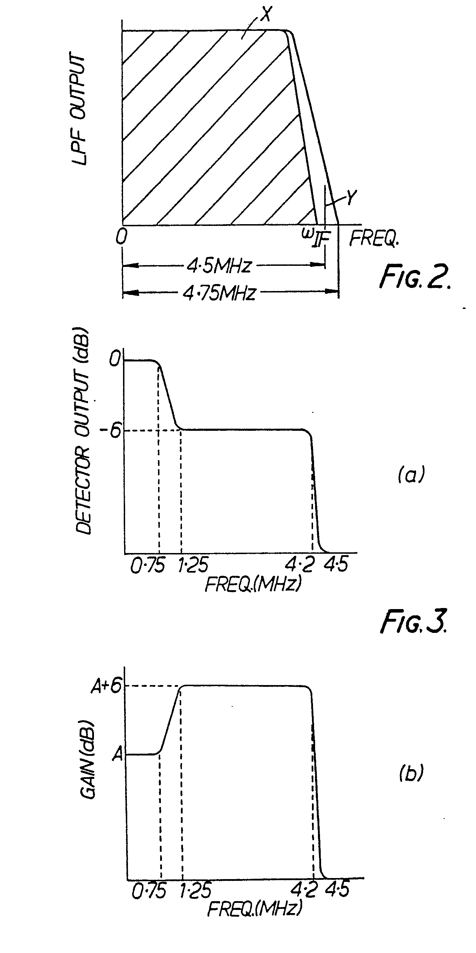

In this manner, the in-phase amplitude of the video carrier is obtained as a detected output. On the other hand, the quadrature-phase amplitude of the video carrier is not detected. The detected output

3

$$\frac{A_o I(t)}{2}$$

is passed through the low-pass filter 4 and is amplified in the signal amplifier 5 as a video detected output which is conveyed through the video signal amplifier 22 and is displayed at the video output apparatus 23. The filtering characteristics of the low-pass filter 4 is shown in Figure 2. Since the video signal is vestigial-sideband modulated, the detector output characteristics of the synchronous detector 3 is shown in Figure 3(a). Therefore, the video amplifier 22 is designed so as to have the characteristics shown Figure 3(b).

Since the sound radio frequency carrier of television broadcast signal is frequency modulated, $v_s(t)$ is written as

$$v_s(t) = A_s \cos[\{\omega_s + S(t)\}t + \phi_s] \tag{7}$$

where $A_s$ is the amplitude of the sound carrier, $\omega_s$ is the angular frequency of the sound carrier, $S(t)$ is a sound signal, and $\phi_s$ is the phase of the sound carrier.

Since the synchronous detector 3 is an analog multiplier, if $v_s(t)$ of the equation (eq., hereafter) (7) and $v_o(t)$ of eq. (2) are applied to the synchronous detector 3, the output $v_{PS}(t)$ is

$$v_{PS} = A_s \cos[\{(\omega_s + S(t)\}t + \phi_s] A_o \cos(\omega_o t + \phi_o)$$

$$= \frac{A_s A_o}{2} \cos[(\omega_s + \omega_o)t + S(t)t + \phi_s + \phi_o]$$

$$+ \frac{A_s A_o}{2} \cos[(\omega_s - \omega_o)t + S(t) + \phi_s - \phi_o] \tag{8}$$

If the term of the frequency $\omega_s + \omega_o$ is removed by the low-pass filter 4, then

$$v_{PS}(t) = \frac{A_s A_o}{2} \cos[(\omega_s - \omega_o)t + S(t)t + \phi_s - \phi_o]$$

$$= \frac{A_s A_o}{2} \cos[\{\omega_{IF} + S(t)\}t + \phi_{IF}] \tag{9}$$

where $\omega_{IF}$ is $\omega_s - \omega_o$, or sound intermediate angular frequency, $\phi_{IF}$ is $\phi_s - \phi_o$, or the phase of the sound intermediate frequency carrier. Eq. (9) shows nothing but the sound intermediate frequency carrier converted from the sound radio frequency carrier signal shown by eq. (7).

The sound intermediate frequency carrier of frequency $\omega_{IF}$ can be passed because of the characteristics of the low-pass filter 4 shown in Figure 2. 4.5 MHz is taken as $\omega_{IF}$, and this diagram shows the example for NTSC system. In other systems the frequency is different. The sound intermediate frequency carrier is passed through the low-pass filter 4 and is amplified in the signal amplifier 5 and the sound intermediate frequency amplifier 24. The output of 24 is detected in the frequency discriminator 25, and the sound signal $S(t)$ is obtained, which is applied to the sound output apparatus 26.

In the previous description, it is assumed that there is no error between the phase of the video carrier $v_V(t)$ and the phase of the output voltage $v_o(t)$ of the voltage controlled local oscillator 2, that is, $\phi = 0$. Such a condition is obtained by the following method.

We apply the output of the voltage controlled local oscillator 2 to the synchronous detector 7 through the 90° phase shifter 6. Let the output of the 90° phase shifter be $v_Q(t)$,

$$v_Q(t) = A_o \sin(\omega_o t + \phi_o) \tag{10}$$

If the above $V_Q(t)$ is applied to the synchronous detector 7 together with the video carrier $v_V(t)$ of eq. (1), the output $v_{PQ}$ of the synchronous detector is

**0 066 430**

$$v_{PQ}(t) = \{I(t)\cos[\omega_V t + \phi_V] - Q(t)\sin[\omega_V t + \phi_V]\}A_o\sin(\omega_o t + \phi_o)$$

$$= \frac{A_o I(t)}{2}\{\sin[(\omega_V + \omega_o)t + \phi_V + \phi_o] - \sin[(\omega_V - \omega_o)t + \phi_V - \phi_o]\}$$

$$- \frac{A_o Q(t)}{2}\{-\cos[(\omega_V + \omega_o)t + \phi_V + \phi_o] + \cos[(\omega_V - \omega_o)t + \phi_V - \phi_o]\}$$

Since $\omega_o = \omega_V$,

$$v_{PQ}(t) = \frac{A_o I(t)}{2}\{\sin[2\omega_V t + \phi_V + \phi_o] - \sin[\omega_V - \phi_o]\}$$

$$- \frac{A_o Q(t)}{2}\{-\cos[2\omega_V t + \phi_V + \phi_o] + \cos(\phi_V - \phi_o)\}$$

If the low pass filter 8 removes the $2\omega_V t$ terms, $v_{PQ}(t)$ becomes

$$v_{PQ}(t) = -\frac{A_o I(t)}{2}\sin\phi - \frac{A_o Q(t)}{2}\cos\phi \qquad (11)$$

The $v_{PQ}(t)$ is amplified in the signal amplifier 9 and is given to the phase comparator 10.

A control voltage $v_c(t)$ is obtained by multiplying the voltages $v_{PV}(t)$ and $v_{PQ}(t)$, shown in eq. (5) and in eq. (11), respectively, in the phase comparator 10.

$$v_c(t) = v_{PV}(t) \cdot v_{PQ}(t)$$

$$= -\frac{A_o{}^2}{8}\{I(t)^2 - Q(t)^2\}\theta - \frac{A_o{}^2}{4}\{I(t)Q(t)\} \qquad (12)$$

where $\theta = 2\phi$.

Since the video carrier signal $v_V(t)$ has the vestigial sideband characteristics, the in-phase component $I(t)$ is always larger than the quadrature component $Q(t)$. Therefore,

$$-\frac{A_o{}^2}{8}\{I(t)^2 - Q(t)^2\} \neq 0.$$

At this time, if the loop bandwidth is narrow enough to eliminate

$$-\frac{A_o{}^2}{4}\{I(t)Q(t)\}$$

the voltage controlled local oscillator 2 is controlled to cause $\theta = 0$. That is, the first PLL or the synchronous receiving system is controlled to cause $\phi = 0$.

When $\phi = 0$, as indicated in eq. (6), the in-phase component amplitude of the video carrier is detected as the detector output.

The synchronous receiving system is made by applying the so-called Costas loop to a television receiver. This application is more effective for a radio receiver than for a television receiver. The reason of the above is that the television signal contains the synchronizing signal for scanning. The television signal always contains the synchronizing signal during broadcast, that is, even if the video signal vanishes, $\{I(t)^2 - Q(t)^2\}$ in eq. (12) does not become zero. In the radio receiver, since a broadcasting signal has both sidebands, $\{I(t)^2 - Q(t)^2\}$ of eq. (12) is $I(t)^2$, and when the sound signal vanishes, this $I(t)^2$ equals zero. That is to say, if the sound signal vanishes, the control voltage $v_c(t)$ of eq. (12) cannot be obtained. Therefore, at this time, the oscillating frequency of the voltage controlled oscillator 2 drifts. The drift causes the synchronous detector 3 to generate beats, and we hear the so-called whistles from the sound output apparatus.

Next, a second PLL or a frequency synthesizer will be described. In the previous description that

5

described the phase control of the voltage controlled local oscillator 2, we have assumed the oscillating frequency $\omega_o(t)$ of the voltage controlled local oscillator 2 equals to the input video carrier frequency $\omega_V(t)$. As previously mentioned, the synchronous receiving system behaves as PLL. But the system behaves not only as PLL, but also as a frequency feed back loop. The frequency synthesizer is equipped as the second PLL to synthesize the local oscillating frequency in the pull-in range. According to a channel number entered in control input apparatus 19, the channel selection circuit 20 gives a dividing ratio to the programmable divider 14. The output of the voltage controlled local oscillator 2 is previously divided and is applied to the programmable divider 14, the divide ratio of which is given in the manner mentioned above.

The output of the programmable divider 14 is applied to one of the input terminal of the phase comparator 15, and the reference signal which is obtained by dividing the output of the reference oscillator 17 in the reference divider 18 is applied to the other terminal of the phase comparator 15. The above mentioned two inputs are compared in the phase comparator 15, and its output is given to the voltage controlled local oscillator 2 through the low-pass filter 16 and the analog switch 12. If the reference oscillator 17 is accurately controlled by a crystal resonator, the voltage controlled local oscillator 2 oscillates with very slight frequency error to the video carrier frequency of the desired selecting channel. Since this frequency error is very small, the pull-in time is short enough to channel selecting performance.

The output of the channel selection circuit 20 also controls the analog switch 12 and the analog switch 21 so as to open the second PLL and to close the first PLL after the frequency synthesizer becomes in the steady-state. Before just the moment when the second PLL is opened, the output voltage of the low-pass filter 16 is applied to the voltage controlled local oscillator 2 through the analog switch 21. This output voltage is also applied to the low-pass filter 11 through the analog switch 21. Here, the analog switch 12 isolates the voltage controlled local oscillator 2 from the output terminal of the low-pass filter 11. Next, the analog switch 12 isolates the voltage controlled local oscillator 2 from the low-pass filter 16 and connects the voltage controlled local oscillator 2 to the low-pass filter 11. At the same time, the analog switch 21 is opened. Before the held voltage for synthesizing a frequency supplied from the second PLL discharges, the voltage $v_c(t)$ for controlling the voltage controlled local oscillator 2 is given from the phase comparator 10. After such a switch operation, the first PLL is closed.

As described above, first, we make the frequency synthesizer formed by the second PLL to generate the output $v_o(t)$ of the voltage controlled local oscillator 2 having the very close frequency of the video carrier frequency $\omega_V(t)$ of the desired selecting channel. Next, we make the first PLL to control the frequency $\omega_o(t)$ and the phase $\phi_o(t)$ of the above mentioned voltage controlled local oscillator output $v_o(t)$ to be equal to the above mentioned frequency $\omega_V(t)$ and its corresponding phase $\phi_V(t)$, respectively, so that the synchronous receiving system which makes synchronous detection for the video carrier signal and makes frequency conversion for the sound carrier signal by the synchronous detector formed by the voltage multiplier becomes in the receiving state.

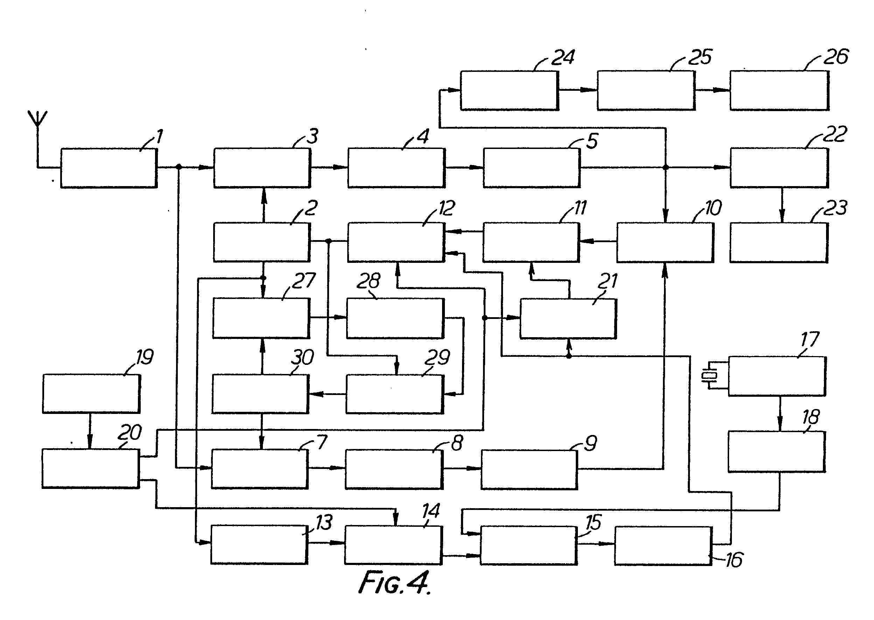

The television synchronous receiver shown in Figure 1 needs a broad-band 90° phase shifter. The embodiment in Figure 4 is intended to use a phase locked loop which locks when the phase error between two input signals is 90°, instead of using the 90° phase shifter.

Figure 4 shows a block diagram of another embodiment of the present invention. In Figure 4, elements from block 1 to 5 and from block 7 to 23 indicate the same elements from the block 1 to 5 and from block 7 to 23 of Figure 1, respectively, and its operation is also the same. A loop which consists of a second phase comparator 27, a low-pass filter 28, a voltage adder 29 and a voltage controlled local oscillator 30, constructs a third PLL and corresponds to the 90° phase shifter 6 in Figure 1. The operation of such a loop is as follows:

Let the output $v_o(t)$ of the first voltage controlled local oscillator 2 be

$$v_o(t)=A_o\cos[\omega_o t+\phi_o(t)] \qquad (2')$$

and the output $v_Q(t)$ of the second voltage controlled local oscillator 30 be

$$v_Q(t)=A_Q\cos[\omega_Q t+\phi_Q(t)] \qquad (10')$$

The voltages $v_o(t)$ and $v_Q(t)$ are given to the second phase comparator. Here, $\omega_o$ and $\phi_o(t)$ indicate a frequency and a phase of a oscillating output of the first voltage controlled oscillator 2, respectively, and $\omega_Q$ and $\phi_Q(t)$ indicate a frequency and a phase of a oscillating output of the second voltage controlled oscillator 30, respectively. In addition, the other phase comparator 10 is called the first phase comparator.

An output $v_d(t)$ of the second phase comparator 27 is

$$v_d(t)=v_o(t) \cdot v_Q(t)$$

$$=A_o A_Q \cos[\omega_o t+\phi_o(t)]\cos[\omega_Q t+\phi_Q(t)]$$

$$=\frac{A_o A_Q}{2}\{\cos[(\omega_o+\omega_Q)t+\phi_o(t)+\phi_Q(t)]$$

$$+\cos[(\omega_o-\omega_Q)t+\phi_o(t)-\phi_Q(t)]\} \qquad (13)$$

**0 066 430**

If $\omega_o = \omega_Q$,

$$v_d(t) = \frac{A_o A_Q}{2}\{\cos[2\omega_o t + \phi_o(t) + \phi_Q(t)] + \cos[\phi_o(t) - \phi_Q(t)]\} \tag{14}$$

When $2\omega_o$ frequency term is removed by filtering $v_d(t)$ in a low-pass filter 28, its output $v_{c1}(t)$ is

$$V_{c1}(t) = \frac{A_o A_Q}{2}\cos[\phi_o(t) - \phi_Q(t)] \tag{15}$$

Therefore, when the difference between $\phi_o(t)$ and $\phi_Q(t)$ is

$$\phi_e(t) = \phi_o(t) - \phi_Q(t) = \pm 90° \tag{16}$$

$v_{c1}(t) = 0$. When $\phi_Q(t)$ leads or lags in phase to the standard in such a condition, the difference of $\phi_Q(t)$ and $\phi_o(t)$ is controlled to become 90°. That is, the output of the first voltage controlled local oscillator 2 or the second voltage controlled local oscillator 30 has the 90° phase difference from each other.

In the above description, we have assumed that $\omega_o = \omega_Q$, i.e., the oscillating frequency of the second voltage controlled local oscillator 30 is equal to the oscillating frequency of the first voltage controlled local oscillator 2. But the free running frequency of the second voltage controlled local oscillator 30 is not always equal to $\omega_o$. Because the voltage control characteristics of the voltage controlled local oscillators 2 and 30 usually differ slightly from each other. Assuming $\Delta\omega$ be the oscillating frequency difference between the first voltage controlled local oscillator 2 and the second voltage controlled local oscillator 30, we will describe a behaviour of the PLL.

Let Laplace transforms of the above mentioned $v_o(t)$, $\phi_o(t)$, $v_Q(t)$, $\phi_Q(t)$, $v_d(t)$, $v_{c1}(t)$ and $\phi_e(t)$ be $V_o(s)$, $\phi_o(s)$, $V_Q(s)$, $\phi_Q(s)$, $V_d(s)$, $V_{C1}(s)$ and $\phi_e(s)$, respectively, a sensitivity of the phase comparator 27 be $K_d$, and a transfer function of the low pass filter 28 be $F(s)$, then

$$V_d(s) = K_d[\phi_o(s) - \phi_Q(s)] \tag{17}$$

$$V_{c1}(s) = F(s)V_d(s) \tag{18}$$

$$\phi_Q(s) = \frac{K_o V_{c1}(s)}{s} \tag{19}$$

From eq. (17)—eq. (19), the transfer function $H(s)$ of the loop is

$$H(s) = \frac{\phi_Q(s)}{\phi_o(s)} = \frac{K_o K_d F(s)}{s + K_o K_d F(s)} \tag{20}$$

then

$$\frac{\phi_e(s)}{\phi_o(s)} = \frac{\phi_o(s) - \phi_Q(s)}{q_o(s)} = 1 - H(s) = \frac{s}{s + K_o K_d F(s)} \tag{21}$$

Therefore the phase error $\phi_e(s)$ is

$$\phi_e(s) = \frac{\phi_o(s)}{s + K_o K_d F(s)} \tag{22}$$

Applying the final value theorem of Laplace transforms to eq. (22), we obtain the steady-state phase error $\phi_e$, i.e.,

$$\phi_e = \lim_{t \to \infty} \phi_e(t)$$

$$= \lim_{s \to 0} \frac{s^2 \phi_o(s)}{s + K_o K_d F(s)} \tag{23}$$

7

If there is the oscillating frequency difference $\Delta\omega$ between the first voltage controlled local oscillator 2 and the second voltage controlled local oscillator 30 as previously described, then

$$\phi_Q(s)=\frac{\Delta\omega}{s^2}$$

Therefore eq. (23) is followed as

$$\phi_e=\lim_{s\to 0}\frac{\Delta\omega}{s+K_oK_dF(s)}$$

$$=\frac{\Delta\omega}{K_oK_dF(0)} \tag{24}$$

Constructing the low pass filter 28 by an active filter, we can make F(0) to be large enough to neglect the phase difference $\phi_e$. In such a way, even when free running the voltage controlled local oscillator 30 has the frequency difference $\Delta\omega$ from the voltage controlled local oscillator 2, when the third PLL is closed, the oscillating output of the second voltage controlled local oscillator 30 has the same frequency with the first voltage controlled local oscillator. That is, we can obtain $\omega_o=\omega_Q$.

Consequently, the third PLL constructed by the phase comparator 27, the low pass filter 28, the voltage adder 29 and the voltage controlled local oscillator 30 of Figure 4 can be used in place of the 90° phase shifter of Figure 1. Moreover, the PLL behaves as the 90° phase shifter with wide frequency range.

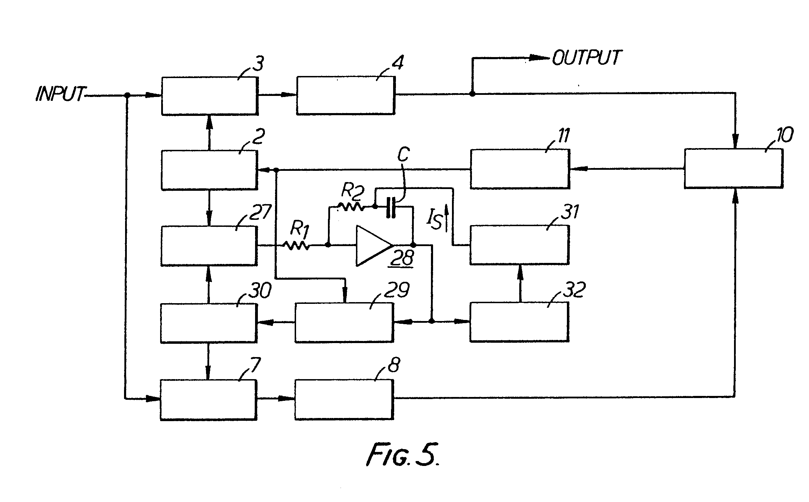

Figure 5 shows a block diagram of further another embodiment of the third PLL. Blocks 2, 3, 4, 7, 8, 10 and 11 of Figure 5 show the same elements of 2, 3, 4, 7, 8, 10 and 11 in Figure 4, respectively, and their operations are also the same. The loop constructed by a phase comparator 27, a low-pass filter 28 and a voltage controlled local oscillator 30 forms a PLL.

We have described the means to obtain $\omega_o=\omega_Q$, in Figure 4. But such a means is effective only in the case that $\Delta\omega$ is small enough. Figure 5 shows an effective means even if there is not such a restriction.

A constant current $I_S$ is supplied from a current switch 31 to a connecting point between a resistor $R_2$ and a capacitor C. Since an integrated voltage whose integrate constant is the product of $R_2$ and C is obtained from the low-pass filter 28, the output frequency of the second voltage controlled local oscillator 30 becomes in swept state. Consequently, the difference of the sweeping frequency and the output frequency $\omega_o$ of the first voltage controlled local oscillator 2 becomes also in the swept state. Let the sweep rate of the sweeping frequency be $\Delta\dot\omega$ rad/sec$^2$, then the input phase of the PLL which consists of the phase comparator 27, the low-pass filter 28 and the voltage controlled local oscillator 30 is

$$-\frac{1}{2}\Delta\dot\omega t^2.$$

Let an output phase of the first voltage controlled local oscillator 2 be $\phi_o(t)$, an output phase difference between the first and the second voltage controlled local oscillator 2 and 30 be $\phi_e(t)$. And let Laplace transforms of both $\phi_o(t)$ and

$$\phi_e(t)-\frac{\pi}{2}$$

be $\phi_o(s)$ and $\phi_e(s)$, respectively, the sensitivity of the phase comparator 27 be $K_d$, the control sensitivity of the voltage controlled local oscillator 30 be $K_Q$, the transfer function of the low-pass filter 28 be F(s), then, as deriving the eq. (22) the phase error $\phi_e(s)$ is

$$\phi_e(s)=\frac{s\phi_o(s)}{s+K_QK_dF(s)} \tag{22'}$$

Since the $\phi_o(s)$ of eq. (22') is the input phase of the PLL which consists of the phase comparator 27, the low-pass filter 28 and the voltage controlled local oscillator 30,

$$\phi_o(s)=-\frac{\Delta\dot\omega}{s^3} \tag{25}$$

If the construction of the low-pass filter is the active filter shown in Figure 5,

$$F(s) = \frac{s\tau_2 + 1}{s\tau_1} \tag{26}$$

where $\tau_1 = R_1 C$, $\tau_2 = R_2 C$.

Substitution of eq. (25) and eq. (26) into eq (22') yields

$$\phi_e(s) = \frac{\Delta\dot\omega}{s^2 + 2\zeta\omega_n + \omega_m{}^2} \tag{27}$$

where

$$\zeta = \frac{\tau_2}{2} \sqrt{\frac{K_Q K_d}{\tau_1}} \quad , \quad \omega_n = \sqrt{\frac{K_Q K_d}{\tau_1}}$$

Consequently, $\phi_e(t) - \pi/2$ in steady state becomes a constant value as

$$\lim[\phi_e(t) - \frac{\pi}{2} = \lim_{s\to 0} s\phi_e(s)$$

$$= \lim_{s\to 0} \frac{-\Delta\dot\omega}{s^2 + 2\zeta\omega_n + \omega_n{}^2}$$

$$= -\frac{\Delta\dot\omega}{\omega_n{}^2}(\text{rad}) \tag{28}$$

That is, the above shows $\omega_Q(t) = \omega_o$.

But, since there remains the phase error as shown in eq. (28), the current switch 31 breaks the constant current $I_s$, after passage of the time for PLL to become in steady state to make the above phase error zero. At this time, substituting the value of eq. (28) into the $\phi_o(s)$ of eq. (22') and applying the final theorem, we obtain

$$\phi_e(t) - \frac{\pi}{2} = \lim_{s\to 0} s\phi_e(s) = 0 \tag{29}$$

Therefore, the phase relation shown eq. (16) is obtained. That is, the phase error between the output of the first voltage controlled local oscillator 2 and the output of the second voltage controlled local oscillator 30 becomes 90°.

Consequently, the PLL which consists of the phase comparator 27, the low-pass filter 28 and the voltage controlled local oscillator 30 of Figure 5 can be used in place of the 90° phase shifter of Figure 1. Moreover, the PLL becomes the 90° phase shifter with wide frequency range.

Further, for the purpose of enabling the voltage controlled local oscillator 30 to start sweeping again when the above mentioned PLL happened to be unlocked, the voltage comparator 32 is provided so as to control the direction of the output current of the current switch 31 at the moment when the output voltage of the low-pass filter 28 reaches a determined value.

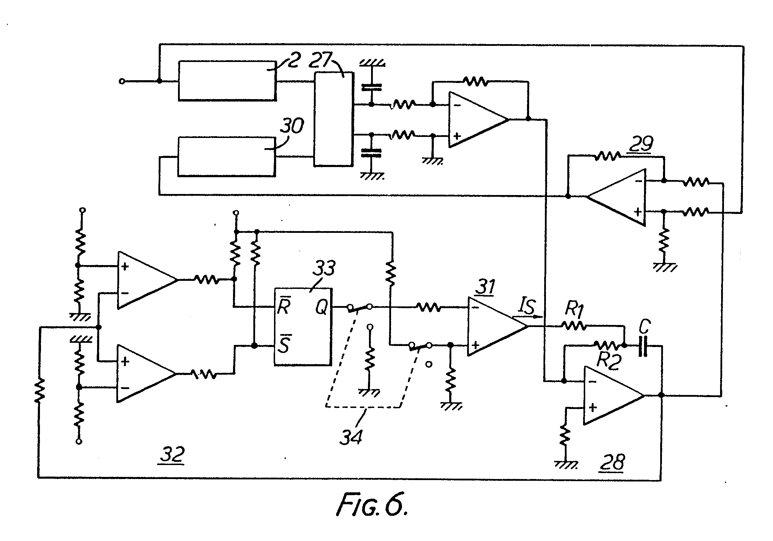

Figure 6 is the more concrete circuit diagram of the above described third PLL. A first voltage controlled local oscillator 2, a second voltage controlled local oscillator 30, a phase comparator 27, a low-pass filter 28, a voltage adder 29, a voltage comparator 32 and a voltage switch 31 correspond to the blocks of the same number shown in Figure 5, respectively. A block 33 shows an R-S flip-flop, and a block 34 shows a switch to control the output $I_s$ from the current switch 31 to be zero to cause the phase error shown by eq. (28). The switch 34 is turned to the opposite side shown in Figure 6 by the detection signal of the PLL's steady state or by the signal generated after passage of enough time for the PLL to reach the steady state.

## Claims

1. A synchronous receiver having a synchronous receiving system comprising: a voltage controlled

9

local oscillator (2); a means (6) for shifting the phase of an output of said voltage controlled local oscillator by 90°; a first and a second synchronous detectors (3, 7) to detect an in-phase component and a quadrature component of a broadcast signal by the output of said voltage controlled local oscillator and an output of said means for shifting the phase of the output of said voltage controlled local oscillator by 90°, respectively; a phase comparator (10) to detect the phase error between said broadcast signal and the output of said voltage controlled local oscillator; a low-pass filter (11) for low-pass filtering an output of said phase comparator and applying said output to said voltage controlled local oscillator, said synchronous receiving system controlling said voltage controlled local oscillator so that the phase error between said broadcast signal and the output of said voltage controlled local oscillator becomes minimum and said first synchronous detector (3) detects said broadcast signal; characterized in that said apparatus further comprising a television channel selecting means (12 to 21) which establishes the output of said voltage controlled local oscillator at very near frequency to the video carrier frequency of a television broadcast signal to select a desired television signal, and that an output signal of a radio frequency input circuit (1) is applied to said first and second synchronous detectors.

2. A television synchronous receiver according to claim 1, wherein said channel selecting means is a phase locked loop frequency synthesizer.

3. A television synchronous receiver according to claim 1, wherein said means for shifting the phase of the output of said voltage controlled local oscillator by 90° is constructed by another phase locked loop which consists of an added second voltage controlled local oscillator (30), a phase comparator (27) for comparing two output phases of said first (2) and second (30) voltage controlled local oscillators, a low-pass filter (28) for filtering an output of said phase comparator (27) and applying the filtered output to said second voltage controlled local oscillator.

4. A television synchronous receiver according to claim 3, wherein said other phase locked loop has a means (28, 31) for sweeping the output frequency of said second voltage controlled local oscillator, and said sweeping the output frequency of said second voltage controlled local oscillator causes the output frequency of said second voltage controlled local oscillator (30) to come near the output frequency of said first voltage controlled local oscillator (2) and then the output of said second voltage controlled local oscillator locks to the output of said first voltage controlled local oscillator with 90° phase error.

**Patentansprüche**

1. Synchronempfänger mit einem Synchronempfangssystem, enthaltend: einen spannungsgesteuerten Überlagerungsoszillator (2); eine Einrichtung (6) zum Verschieben der Phase eines Ausgangs des spannungsgesteuerten Überlagerungsoszillators um 90°; einen ersten und einen zweiten Synchrondetektor (3, 7) zur Ermittlung einer phasengleichen Komponente und einer um 90° verschobenen Komponente eines Rundfunksignals durch den Ausgang des genannten spannungsgesteuerten Überlagerungsoszillators bzw. einen Ausgang der genannten Einrichtung zum Verschieben der Phase des Ausgangs des genannten spannungsgesteuerten Überlagerungsoszillators um 90°; einen Phasenkomparator (10) zum Ermitteln des Phasenfehlers zwischen dem Rundfunksignal und dem Ausgang des genannten spannungsgesteuerten Überlagerungsoszillators; ein Tiefpaßfilter (11) zur Tiefpaßfilterung eines Ausgangs des Phasenkomparators und zum Zuführen des genannten Ausgangs zu dem genannten spannungsgesteuerten Überlagerungsoszillator, wobei das Synchronempfangssystem den spannungs-gesteuerten Überlagerereroszillator derart steuert, daß der Phasenfehler zwischen dem Rundfunksignal und dem Ausgang des spannungsgesteuerten Überlagerungsoszillators minimal wird und der erste Synchrondetektor (3) das Rundfunksignal gleichrichtet, dadurch gekennzeichnet, daß die Vorrichtung weiterhin eine Fernsehkanalwähleinrichtung (12—21) enthält, die den Ausgang des genannten spannungsgesteuerten Überlagerungsoszillators bei einer sehr nahen Frequenz zur Videoträgerfrequenz eines Fernsehrundfunksignals einrichtet, um ein gewünschtes Fernsehsignal auszuwählen, und daß ein Ausgangssignal eines HF-Eingangskreises (1) den ersten und zweiten Synchrondetektoren zugeführt wird.

2. Fernsehsychronempfänger nach Anspruch 1, bei dem die Kanalwähleinrichtung ein mit einer Phasenverriegelungsschleife versehener Frequenzsynthesizer ist.

3. Fernsehsynchronempfänger nach Anspruch 1, bei dem die Einrichtung zum Verschieben der Phase des Ausgangs des genannten spannungsgesteuerten Überlagerungsoszillators um 90° durch eine weitere Phasenverriegelungsschleife gebildet ist, die aus einem zusätzlichen zweiten spannungsgesteuerten Überlagerungsoszillator (30), einem Phasenkomparator (27) zum Vergleichen zweier Ausgangsphasen der ersten (2) und zweiten (30) spannungsgesteuerten Überlagerungsoszillatoren, einem Tiefpaßfilter (28) zum Filtern eines Ausgangs des Phasenkomparators (27) und zum Zuführen des gefilterten Ausgangs zu dem zweiten spannungsgesteuerten Überlagerungsoszillator besteht.

4. Fernsehsynchronempfänger nach Anspruch 3, bei dem die genannte weitere Phasenverriegelungsschleife eine Einrichtung (28, 31) zum Wobbeln der Ausgangsfrequenz des zweiten spannungsgesteuerten Überlagerungsoszillators aufweist, und daß die Wobbelung der Ausgangsfrequenz des zweiten spannungsgesteuerten Überlagerungsoszillators bewirkt, daß die Ausgangsfrequenz des zweiten spannungsgesteuerten Überlagerungsoszillators (30) sich der Ausgangsfrequenz des ersten spannungsgesteuerten Überlagerungsoszillators (2) annähert, und daß dann der Ausgang des zweiten spannungsgesteuerten Überlagerungsoszillators am Ausgang des ersten spannungsgesteuerten Überlagerungsoszillators mit 90° Phasenfehler verriegelt.

**Revendications**

1. Récepteur synchrone comprenant un système de réception synchrone qui comporte: un oscillateur local (2) commandé par tension; un dispositif (6) de décalage de la phase d'une sortie de l'oscillateur local commandé par tension de 90°; un premier et un second détecteurs synchrones (3, 7) destinés à détecter une composante en phase et une composante en quadrature d'un signal diffusé par la sortie dudit oscillateur local commandé par tension et une sortie dudit dispositif pour décaler la phase de la sortie de l'oscillateur local commandé par tension de 90° respectivement; un comparateur de phase (10) destiné à détecter l'erreur de phase entre ledit signal diffusé et la sortie dudit oscillateur local commandé par tension; un filtre passe-bas (11) destiné au filtrage passe-bas d'une sortie dudit comparateur de phase et appliquant ladite sortie audit oscillateur local commandé par tension, ledit système de réception synchrone commandant ledit oscillateur local commandé par tension de manière que l'erreur de phase entre ledit signal diffusé et la sortie dudit oscillateur local commandé par tension devienne minimale, et ledit premier détecteur synchrone (3) détectant ledit signal diffusé; caractérisé en ce que ledit appareil comporte en outre un dispositif de sélection (12 à 21) de canal de télévision qui établit la sortie dudit oscillateur local commandé par tension à une fréquence très proche de la fréquence porteuse vidéo d'un signal diffusé de télévision pour sélectionner un signal de télévision voulu et en ce qu'un signal de sortie d'un circuit d'entrée à haute fréquence (1) est appliqué audit premier et audit second détecteur synchrone.

2. Récepteur synchrone de télévision selon la revendication 1, dans lequel ledit dispositif de sélection de canal est un synthétiseur de fréquence à boucle à verrouillage de phase.

3. Récepteur synchrone de télévision selon la revendication 1, dans lequel ledit dispositif de décalage de la phase de la sortie de l'oscillateur local commandé par tension de 90° est constitué par une autre boucle à verrouillage de phase qui comporte un second oscillateur local (30) commandé par tension, un comparateur de phase (27) qui compare deux phases de sortie dudit premier (2) et dudit second (30) oscillateurs locaux commandés par tension, un filtre passe-bas (28) qui filtre une sortie dudit comparateur de phase (27) et qui applique la sortie filtrée audit second oscillateur local commandé par tension.

4. Récepteur synchrone de télévision selon la revendication 3, dans lequel ladite autre boucle à verrouillage de phase comporte un dispositif (28, 31) pour balayer la fréquence de sortie dudit second oscillateur local commandé par tension, et ledit balayage de la fréquence de sortie dudit second oscillateur local commandé par tension entraine que la fréquence de sortie du second oscillateur local (30) commandé par tension s'approche de la fréquence de sortie dudit premier oscillateur local (2) commandé par tension, et la sortie du second oscillateur local commandé par tension verrouille la sortie du premier oscillateur local commandé par tension avec une erreur de phase de 90°.

FIG.I.

0 066 430

FIG. 2.

(a)

FIG. 3.

(b)

2

Fig.4.

0 066 430

FIG. 5.

0 066 430

Fig. 6.